# EUROPÄISCHE PATENTANMELDUNG

(11) **EP 2 638 967 A1**
(43) Veröffentlichungstag der Anmeldung: **18.09.2013**
(21) Anmeldenummer: 12159703.3
(22) Anmeldetag: 15.03.2012
(51) Int. Cl.: B03C 1/28, B03C 1/14, B03C 1/01, F16J 15/43

(54) **Verfahren und Vorrichtung zum Beeinflussen eines Fließparameters einer Suspension und Steuer- und/oder Regeleinrichtung**

(71) Anmelder: Siemens Aktiengesellschaft, 80333 München (DE)
(72) Erfinder: Böhnlein, Rudolf, 96052 Bamberg (DE)

(57) **Zusammenfassung**

Die Erfindung betrifft eine Vorrichtung zum Beeinflussen eines Fließparameters einer magnetische Partikel (M) aufweisenden, von einer Begrenzung (B) geführten, in einem industriellen Prozess verarbeitbaren Suspension (S), eine Steuer-und/oder Regeleinrichtung (10) für eine solche Vorrichtung und ein Verfahren zum Beeinflussen eines Durchflusses einer magnetische Partikel (M) aufweisenden, von einer Begrenzung (B) geführten, in einem industriellen Prozess verarbeitbaren Suspension (S). Indem mittels eines Magnetfelds auf die von der Suspension (S) umfassten Partikel (M) derart eingewirkt wird, dass die Partikel (M) sich in einem vorbestimmten Bereich der Begrenzung (B) ansammeln oder sich aus diesem vorbestimmten Bereich entfernen, und das Magnetfeld derart ausgebildet ist, dass mittels des Ansammelns und/oder Entfernens der Partikel (M) ein vorgegebener Fließparameter der Suspension (S) eingestellt wird, wird eine besonders wirtschaftliche, weil verschleißarme Beeinflussung eines Suspensionsflusses gewährleistet.

## Beschreibung

Die Erfindung betrifft ein Verfahren zum Beeinflussen eines Fließparameters einer magnetische Partikel aufweisenden, von einer Begrenzung geführten, in einem industriellen Prozess verarbeitbaren Suspension. Ferner betrifft die Erfindung eine Vorrichtung zum Beeinflussen eines Fließparameters einer magnetische Partikel aufweisenden, von einer Begrenzung geführten, in einem industriellen Prozess verarbeitbaren Suspension und eine Steuer- und/oder Regeleinrichtung hierzu.

Aus dem Stand der Technik ist eine Vielzahl an Möglichkeiten bekannt, Fließparameter von Flüssigkeiten und Flüssigkeitsgemischen zu beeinflussen. Typischerweise werden hierzu verschiedenartige Ventile genutzt, Buhnen, Dichtungen oder andere den Fluss von fließfähigen Strömen beeinflussende Komponenten. Insbesondere bei abrasiven Flüssigkeitsgemischen, wie etwa Suspensionen mit hohem Feststoffanteil, wie sie etwa auf dem technischen Gebiet des Bergbaus auftreten, kommt es zu einem erhöhten Verschleiß derartiger Teile. Der Verschleiß bedingt Stillstandszeiten für die Anlage und Kosten für Ersatzteile, was zu wirtschaftlichen Belastungen führt.

Die ist insbesondere relevant für Magnetseparatoren, welche in der Bergbauindustrie und der Metallindustrie, aber auch in anderen Industriezweigen eingesetzt werden. So beschreibt die RU 2365421 C1 einen Magnetseparator für eine Nassscheidung, mit einer Trommel und einer Magnetanordnung, welche um die Trommelachse der Trommel rotierend ausgebildet ist und Permanentmagnete umfasst,

Aufgabe der vorliegenden Erfindung ist es, eine besonders wirtschaftliche Beeinflussung eines Suspensionsflusses zu gewährleisten.

Verfahrensmäßig wird diese Aufgabe gelöst durch ein Verfahren zum Beeinflussen eines Durchflusses einer magnetische Partikel aufweisenden, von einer Begrenzung geführten, in einem industriellen Prozess verarbeitbaren Suspension, wobei mittels eines Magnetfelds auf die von der Suspension umfassten Partikel derart eingewirkt wird, dass die Partikel sich in einem vorbestimmten Bereich der Begrenzung ansammeln oder sich aus diesem vorbestimmten Bereich entfernen, und das Magnetfeld derart ausgebildet ist, dass mittels des Ansammelns und/oder Entfernens der Partikel ein vorgegebener Durchfluss der Suspension eingestellt wird, insbesondere, dass mittels des Ansammelns und/oder Entfernens der Partikel ein Strömungshindernis gebildet wird, wobei mittels des Strömungshindernisses ein Fließparameter der Suspension gezielt beeinflusst, insbesondere eingestellt oder geändert, wird.

Es wird somit mittels der von der Suspension umfassten magnetischen Partikel ein Strömungshindernis für die Pulpe geschaffen, welches den Fluss der Suspension beeinflusst. Durch das Magnetfeld können die Parameter des Strömungshindernisses eingestellt werden. Insbesondere kann das Magnetfeld derart ausgebildet sein, dass durch ein Ansammeln von Magnetpartikeln eine Volumenvergrößerung des Strömungshindernisses erfolgt oder durch ein Entfernen von Partikeln aus dem Strömungshindernis eine Volumenverkleinerung des Strömungshindernisses erfolgt. Derartige Beeinflussungen der Parameter des Strömungshindernisses erfolgen über das in der Suspension wirkende Magnetfeld. Insbesondere kann das Magnetfeld auch derart ausgebildet sein, dass das Strömungshindernis im Wesentlichen konstante räumliche Parameter aufweist.

Als Fließparameter kommen grundsätzlich alle für den Fluss der von der Begrenzung geführten Suspension relevanten Größen in Betracht, bspw. die Fließgeschwindigkeit, Laminarität der Strömung, Volumenstrom, Durchflussöffnungen, usw.

Als Begrenzung kommen alle Arten von Begrenzungen in Betracht, die geeignet sind, einen Suspensionsstrom zu führen.

Typsicher sind dies etwa Kanäle oder Rohre, etc. Als industriell verarbeitbare Suspension kommen alle fließfähigen Fest-Flüssig-Stoffgemische in Frage, welche in technischen Anlagen oder Einrichtungen prozessiert werden können.

Eine Suspension liegt mindestens an dem vorbestimmten Bereich der Begrenzung vor, an welcher mittels des Magnetfelds eine Ablagerung von magnetischen Partikeln angestrebt wird. In Strömungsrichtung vor- und/oder nachgelagert zu diesem vorbestimmten Bereich kann die feste Phase aus der Suspension abgetrennt sein, so dass ein reiner Flüssigkeitsstrom gegeben sein kann.

Die Verwendung eines derartigen Verfahrens erlaubt es, den Durchfluss einer Suspension, und damit eines eine flüssige Phase aufweisenden Stoffstroms, ohne mechanischen Verschleiß an einem Bauteil zu beeinflussen, indem das den Suspensionsfluss beeinflussende Strömungshindernis durch magnetische Partikel, welche in der Suspension zumindest im vorbestimmten Bereich vorliegen, gebildet wird.

Das Verfahren ist besonders vorteilhaft für industrielle Prozesse, wie Abwasserprozesse, Prozesse der Papierindustrie, Prozesse in der Rohstoffindustrie, insbesondere Bergbau, einsetzbar.

In einer vorteilhaften Ausführungsform des Verfahrens wird mittels des Magnetfelds der Durchfluss als Fließparameter eingestellt, wobei der Durchfluss auf im Wesentlichen Nulleingestellt wird. Das Strömungshindernis kann daher mittels des Magnetfelds derart ausgestaltet werden, dass es die Funktion einer Dichtung erfüllt. Auch diese Dichtungsfunktion kann faktisch verschleißfrei bereitgestellt werden. Insbesondere ist in diesem Zusammenhang eine Verwendung von Dauermagneten denkbar, um eine Dichtung aus magnetischen Partikeln bereitzustellen. Der Dauermagnet kann hierzu entsprechend ausgelegt und positioniert werden. Eine weitere Energieversorgung des Dauermagnets zur Bereitstellung der Dichtung ist nicht erforderlich. Hierdurch kann besonders vorteilhaft eine verschleißfreie und aufwandsarme Dichtung bereitgestellt werden.

In einer bevorzugten Ausgestaltung des Verfahrens kann das in der Suspension wirksame Magnetfeld veränderlich eingestellt werden, insbesondere derart, dass mittels des Magnetfels ein von magnetischen Partikeln gebildetes Strömungshindernis derart ausgestaltet wird, dass ein bestimmter Fließparameter gezielt beeinflusst, insbesondere eingestellt oder gezielt geändert wird. Grundsätzlich können für die Erzeugung des Magnetfelds alle dem Fachmann bekannte Mittel herangezogen werden. Insbesondere kommen hier Dauermagnete, Elektromagnete, mit und ohne Kern, insbesondere Eisenkern, oder eine Kombination verschiedener Magnete in Betracht. Die Einstellbarkeit des Magnetfelds erhöht die Flexibilität für die Einstellung eines Fließparameters, insbesondere des Durchflusses. Insbesondere können die Parameter der Suspension und die Prozessbedingungen bei der Einstellung des Magnetfelds gezielt berücksichtigt werden. Auf Veränderungen der Suspensionsparameter kann damit schnell und effizient reagiert werden. Die Veränderung des Magnetfelds kann bspw. durch Änderung der räumlichen Anordnung des wenigstens einen Magnets relativ zur Begrenzung erreicht werden. Für Elektromagnete kann bspw. zusätzlich der Stromfluss durch die entsprechenden Magnetspulen zur Einstellung des Magnetfelds verwendet werden.

In einer weiteren vorteilhaften Ausführungsform des Verfahrens wird der Ist-Fließparameter in Strömungsrichtung vor und/oder hinter dem vorbestimmten Bereich erfasst, und das Magnetfeld anhand des Ist-Fließparameters eingestellt. Das Erfassen eines Ist-Fließparameters, bspw. des Durchflusses oder der Fließgeschwindigkeit, erlaubt eine Rückmeldung hinsichtlich des tatsächlichen Suspensionsflusses, welcher dann in gewünschter Weise durch Änderung des Magnetfelds einstellt werden kann. Dies kann manuell oder automatisch erfolgen.

In einer weiteren Ausführungsvariante des Verfahrens wird der erfasste Ist-Fließparameter mit einem Soll-Fließparameter verglichen und das Magnetfeld anhand des Vergleichs gesteuert und/oder geregelt. Dies erlaubt eine dynamische Steuerung und/oder Regelung des gewünschten Fließparameters mittels des gebildeten Strömungshindernisses. Hierdurch kann eine hohe Prozessstabilität erreicht werden. Diese Ausführungsform wird bevorzugt automatisiert ausgeführt.

In einer weiteren vorteilhaften Ausführungsform des Verfahrens wird die Suspension durch Zugabe magnetischer Partikel für den Zweck der Einstellung eines Fließparameters erzeugt oder werden die magnetischen Partikel der Suspension für den Zweck der Einstellung eines Fließparameters zugegeben. Die erste Alternative tritt dann auf, wenn lediglich ein Flüssigkeitsstrom vorliegt, und der Fluss der Flüssigkeit aber mit einem magnetisch erzeugten Strömungshindernis beeinflusst werden soll. In diesem Fall entsteht die Suspension erst durch Zugabe der magnetischen Partikel. Die zweite Alternative ist dann vorteilhaft anwendbar, wenn die Ausgangssuspension keine oder unzureichend oder ungeeignete magnetische Partikel aufweist.

Die magnetischen Partikel werden vorzugsweise an einer Stelle in der Anlage zugegeben, welche stromaufwärts im Vergleich zum vorbestimmten Bereich der Begrenzung, an welchem die magnetischen Partikel ein einstellbares Strömungshindernis bilden sollen, angeordnet ist. Dies erlaubt, das erfindungsgemä-βe Verfahren bei beliebigen, industriell verarbeiteten fließfähigen Strömen mit flüssiger Phase anzuwenden.

Ein einer alternativen Ausführungsvariante des Verfahrens wird das Verfahren für eine Erz, insbesondere magnetisches Erz, aufweisende Suspension verwendet. Aufgrund der hohen Abrasivität der Stoffströme in Bergbauprozessen ist hier das Verfahren besonders geeignet. Besonders vorteilhaft lässt sich dieses Verfahren verwenden bei der Prozessierung von magnetischen, insbesondere ferromagnetischen Erzen, da durch das vorhandene Erz die magnetischen Partikel zur Erzeugung eines Strömungshindernisses bereitgestellt werden.

Die Aufgabe wird ferner gelöst durch eine Steuer- und/oder Regeleinrichtung für eine Vorrichtung zur Beeinflussung eines Fließparameters einer magnetische Partikel aufweisenden, von einer Begrenzung geführten, in einem industriellen Prozess verarbeitbaren Suspension, mit einem maschinenlesbaren Programmcode, welcher Steuerbefehle aufweist, welche die Steuer-und/oder Regeleinrichtung bei deren Ausführung zur Durchführung des Verfahrens nach einem der vorhergehenden Ansprüche veranlassen.

Die Aufgabe wird auch gelöst durch eine Vorrichtung zum Beeinflussen eines Fließparameters einer magnetische Partikel aufweisenden, von einer Begrenzung geführten, in einem industriellen Prozess verarbeitbaren Suspension, umfassend eine Einrichtung zur Erzeugung eines in der Suspension wirkenden Magnetfelds, wobei das Magnetfeld derart ausgestaltbar ist, dass dieses das Ansammeln und/oder Entfernen von Partikeln in einem vorbestimmten Bereich der Begrenzung bewirkt, wobei mittels des Ansammelns und/oder Entfernens der Partikel der Fließparameter der Suspension einstellbar ist, insbesondere dadurch einstellbar ist, dass mittels des auf die Partikel einwirkenden Magnetfelds ein den Fluss der Suspension beeinflussendes Strömungshindernis erzeugbar ist.

Vorteilhaft ist es ferner eine Steuer- und/oder Regeleinrichtung nach Anspruch 8 vorzusehen, wobei die Steuer- und/oder Regeleinrichtung mit der Einrichtung zur Erzeugung eines in der Suspension wirkenden Magnetfelds wirkverbunden ist. Hierdurch kann der industrielle Prozess in üblicherweise gesteuert und/oder geregelt werden. Dies ist besonders vorteilhaft mit einer Einrichtung zur Erfassung eines Suspensionsfließparameters kombinierbar, die mit der Steuer- und/oder Regeleinrichtung wirkverbunden ist.

Eine besonders vorteilhaften Ausführungsform umfasst die Vorrichtung eine drehbar gelagerte zylinderformartige Separatortrommel zur Trennung von magnetischen Erzpartikeln aus einer Erz-haltigen Pulpe, und ein Gehäuse für die Separatortrommel, wobei ein Abschnitt des Gehäuses und eine dem Gehäuseabschnitt gegenüberliegende Stirnseite der Separatortrommel einen von Erz-haltiger Pulpe durchfließbaren Spalt bilden, wobei im Bereich des Spaltes eine Einrichtung zur Erzeugung eines in der Suspension wirkenden Magnetfelds abgeordnet ist, wobei der Spalt durch Einwirken des Magnetfelds mittels angesammelter magnetische Erz-Partikel zumindest abschnittsweise im Wesentlichen durchflussdicht verschlossen ist. Hierdurch kann das Problem der Leckströme bei Trommelscheidern wirksam beseitig werden.

In einer weiteren vorteilhaften Ausführungsform ist die Magnetfelderzeugungseinrichtung auf einer der Suspension abgewandten Seite der Begrenzung angeordnet, wobei die Begrenzung zumindest am Ort der Anordnung wenigstens teilweise im Wesentlichen unmagnetisch ausgebildet ist. Dies hat den Vorteil, dass die Magnetfelderzeugungseinrichtung besonders einfach gewartet werden kann und ggf. auch ausgetauscht werden kann, da diese vergleichsweise einfach zugänglich ist.

Weitere Vorteile der Erfindung ergeben sich anhand der nachfolgenden Ausführungsbeispiele, welche mittels der schematisch dargestellten Zeichnungen genauer erläutert werden.

Es zeigen:
- FIG 1: eine schematische Darstellung einer Anordnung zur Beeinflussung eines Fließparameters einer Suspension in einer industriellen Anlage, insbesondere des Strömungsquerschnitts eines Rohrs,
- FIG 2: eine schematische Darstellung eines Ausschnitts eines Trommelscheiders für eine Nassabscheidung von Erz mit einer aus magnetischen Partikeln bestehenden Dichtung, und
- FIG 3: eine schematische Darstellung eines Ausschnitts eines Trommelscheiders für eine Nassabscheidung von Erz mit einer aus magnetischen Partikeln bestehenden Dichtung mit alternativer Anordnung der Magnetfelderzeugungseinrichtung.

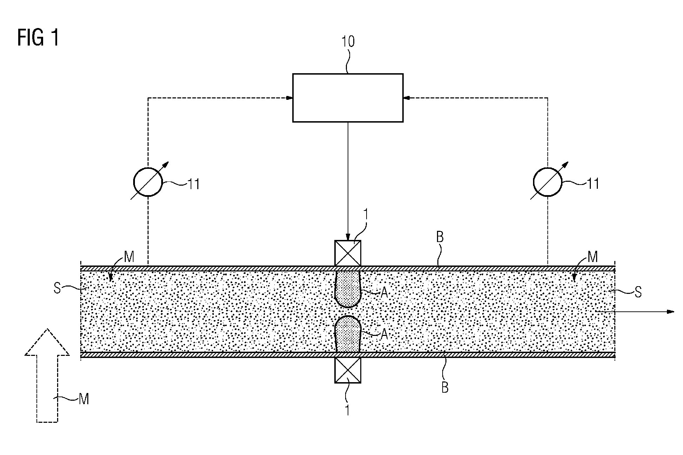

FIG 1 zeigt einen Ausschnitt eines eine Suspension S führende Rohres. Die Begrenzung B des Rohres wird durch eine Rohrwandung gebildet, welche die Suspension S führt und damit deren Ausbreitungsmöglichkeiten begrenzt.

An einem vorgegeben Bereich des Rohres ist eine Magnetfelderzeugungseinrichtung 1 angeordnet, welche dazu ausgebildet ist, ein veränderlich einstellbares Magnetfeld zu erzeugen. Die Magnetfelderzeugungseinrichtung 1 erstreckt sich ringförmig um das die Suspension S führende Rohr.

Die von der Magnetfelderzeugungseinrichtung 1 ausgehenden, nicht dargestellten magnetischen Flusslinien, sind im vorliegenden Ausführungsbeispiel im Wesentlichen senkrecht zur Rohrwandung B orientiert, d.h. verlaufen in radialer Richtung.

Um mittels des von der Magnetfelderzeugungseinrichtung 1 ausgehenden Magnetfels den Fluss der Suspension S zu beeinflussen, ist das Vorliegen magnetischer Partikel M in der Suspension S erforderlich.

Diese werden - sofern dies erforderlich ist - vorzugsweise stromaufwärts verglichen zum Bereich, in welchem die Magnetfelderzeugungseinrichtung angeordnet ist, in den zumindest eine flüssige Phase umfassenden Stoffstrom eingebracht. In einem Spezialfall entsteht die Suspension erst durch das Einbringen der magnetischen Partikel M in eine Flüssigkeitsströmung.

Das Einbringen magnetischer Partikel M kann insbesondere dann zweckmäßig erfolgen, wenn der ohne Einbringung von Magnetpartikeln M in der Suspension S vorliegende Anteil an magnetischen Partikeln M der von der Suspension S umfassten Festphase zu gering ist oder die Suspension S frei von magnetischen Partikeln M ist. Darüber hinaus kann das Einbringen magnetischer Partikel M in die Suspension dann zweckmäßig sein, wenn magnetische Partikel M in einem Größenbereich in der Suspension vorliegen, die für die Bildung eines Strömungshindernisses aus magnetischen Partikeln M ungeeignet ist. In FIG 1 ist die optionale Einbringung von Magnetpartikeln M in einen Flüssigstoffstrom mit einem Pfeil in gestrichelter Darstellung gezeigt.

Durch die in FIG 1 gezeigte Anordnung ist es möglich, mittels der Magnetfelderzeugungseinrichtung 1 ein Magnetfeld auf die Suspension S einwirken zu lassen, welches dazu führt, dass sich im Bereich der Magnetfelderzeugungseinrichtung 1 magnetische Partikel M an der Rohrwandung B ansammeln und ein Strömungshindernis aus einem Magnetpartikelagglomerat A bilden. Dies beeinflusst die Strömung der Suspension S. Insbesondere kann die Strömung mittels eines derartigen Agglomerats A gezielt beeinflusst werden.

Um einen Durchfluss in gewünschter Weise zu beeinflussen, ist es vorteilhaft, zusätzlich Messeinrichtungen vorzusehen, welche in Strömungsrichtung vor und/oder hinter dem Bereich, in welchem sich das Strömungshindernis bildet, angeordnet sind. Diese können erfassbare Prozessgrößen, wie etwa eine Fließgeschwindigkeit, erfassen und zugehörige Signale für Regelzwecke an die Steuer- und/der Regeleinrichtung 10 übermitteln.

Die Steuer- und/oder Regeleinrichtung 10 ist im Ausführungsbeispiel auch mit der Magnetfelderzeugungseinrichtung 1 wirkverbunden, so dass der Fluss der Suspension S insbesondere automatisiert einstellbar ist. Insbesondere können hierzu dynamisch oder statisch Soll-Parameter des Prozesses vorgegeben werden, welche durch Steuer- und/der Regelmaßnahmen der Magnetfelderzeugungseinrichtung 1 angestrebt werden.

Hierzu wird weißt die Steuer- und/oder Regeleinrichtung maschinenlesbaren Programmcode auf, welcher Steuerbefehle umfasst, welche bei deren Ausführung, die Steuer- und/oder Regeleinrichtung dazu veranlasst, insbesondere die Magnetfelderzeugungseinrichtung derart zu beeinflussen, dass die Ist-Parameter in Richtung eines Soll-Parameters des Prozesses verändert werden.

Ein solches Verfahren ist für eine Vielzahl industrieller Prozesse anwendbar und erlaubt eine verschleiß freie Abdichtung oder Beeinflussung des Flusses zumindest im Bereich der Magnetfelderzeugungseinrichtung 1 vorliegenden Suspension S.

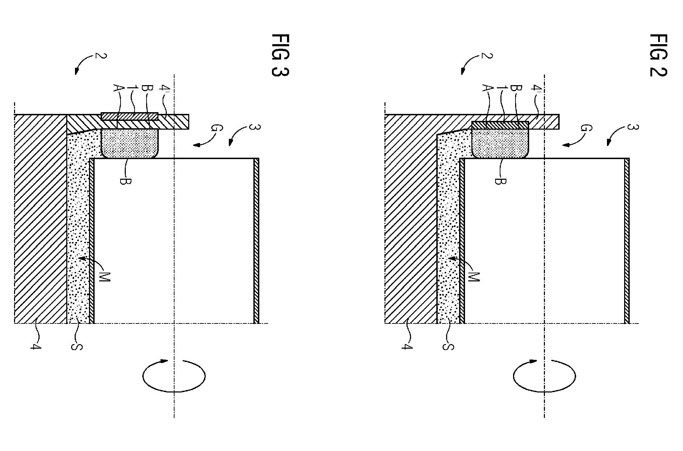

FIG 2 zeigt eine schematische Darstellung eines Ausschnitts eines Trommelscheiders 2. Dieser dient in der Bergbauindustrie dazu, magnetische Erze, z.B. Eisenerze, aus einer, auch taubes Gestein enthaltenden Suspension, auch Pulpe genannt, zu separieren. Es handelt sich hierbei um eine sogenannte Nassabscheidung. Vorliegend werden somit die magnetischen Partikel M in Form der in der Pulpe vorliegenden Erzpartikel bereitgestellt.

Der Trommelscheider 2 umfasst eine Separatortrommel 3, welche in FIG 2 nicht gezeigte Magnete aufweist, mit welchen das magnetische Erz gebunden wird. Indem die Separatortrommel 3 eine Rotationsbewegung um ihre Längsachse ausführt, werden die magnetischen Erzpartikel aus der erzhaltigen Pulpe entfernt und mittels Abscheidung von den Trommelmagneten an einem von der Pulpe räumlich getrennten Ort angereichert.

Das Zuleitungssystem der Pulpe S auf die Separatortrommel 3 und das Austragverfahren für die Erzpartikel aus der Pulpe lässt es jedoch häufig zu, dass Leckströme, umfassend erzhaltige Partikel, entstehen, welche dazu führen, dass bereits aus der Pulpe abgetrennte Erzpartikel wieder über die Stirnseiten der Separatortrommel 3 der taubes Gestein aufweisenden Pulpe S zufließen.

In der Regel geschieht dies durch einen Spalt G zwischen einem Gehäuseabschnitt 4' des Gehäuses 4 des Trommelscheiders 2 und der jeweiligen Stirnseite der Separatortrommel 3. Diese bilden in diesem Fall die Begrenzung B, welche diese Suspension in diesem Bereich führt. Das Auftreten dieser Leckströme ist unerwünscht, da dies die Effizienz des Trommelscheiders reduziert.

Vorliegend wird dieses Problem des Trommelscheiders 2 in wirtschaftlicher Weise dadurch gelöst, dass an den der Stirnseite gegenüberliegenden Gehäuseabschnitte 4' eine entsprechende Magnetfelderzeugungseinrichtung 1 angeordnet ist, beispielsweise in Form eines starken Dauermagneten. Die Verwendung eines Dauermagneten ist dahingehend vorteilhaft, weil dieser keine weitere Energieversorgung benötigt, um ein Magnetfeld bereitzustellen.

Kommt es zu Leckströmen über die Stirnseite der Separatortrommel 3, so akkumuliert das von der Magnetfelderzeugungseinrichtung 1 ausgehenden Magnetfeld magnetische Erzpartikel im Wirkungsbereich des Magnetfelds, d.h. im Spalt G.

Die Magnetfelderzeugungseinrichtung ist derart ausgelegt und positioniert, dass der Spalt G im Abschnitt des Wirkbereichs des Magnetfelds zumindest nach und nach mit magnetischen Partikeln zugesetzt, so dass der Spalt G abschnittsweise im Wesentlichen durchflussdicht von den magnetischen Erzpartikeln verschlossen wird. In FIG 2 ist dies gezeigt, durch das von den magnetischen Erzpartikeln M gebildete, die Dichtung bereitstellende Agglomerat A. Vorzugsweise erfolgt eine derartige Abdichtung mit einem im Wesentlichen aus magnetischen Erzpartikeln bestehenden Agglomerat A auf beiden Stirnseiten der Separatortrommel 3.

Hierdurch wird der Leckstromabfluss zurück in die Pulpe S unterbunden und die Effizienz des Trommelscheiders 2 erhöht. Insbesondere unterliegt diese abschnittsweise Dichtung aus Erzpartikel-Agglomeraten A keinem Verschleiß, da diese aus den Erzpartikeln selbst gebildet ist.

FIG 3 zeigt den Ausschnitt einer schematischen Darstellung eines Trommelscheiders 2 gemäß FIG 2. Es gilt somit die Bedeutung der Bezugszeichen der FIG 2 auch für FIG 3.

Der Trommelscheider gemäß FIG 3 unterscheidet sich jedoch von dem in FIG 2 Gezeigten dadurch, dass die Magnetfelderzeugungseinrichtung 1 nicht auf der der Suspension S zugewandten Seite des Gehäuseabschnitts 4' angeordnet ist, sondern auf der der Suspension S abgewandten Seite des Gehäuseabschnitts 4', d.h. in diesem Fall auf der Außenseite des Gehäuses 4, angeordnet ist.

Nachteilig hierbei wäre es, wenn der zwischen der Magnetfelderzeugungseinrichtung 1 und der Suspension S angeordnete Gehäuseabschnitt 4' magnetisch isolierend wirken würde. Daher ist bei einer derartigen Anordnung vorzugsweise der entsprechende Gehäuseabschnitt 4' zumindest teilweise im Wesentlichen unmagnetisch ausgebildet, so dass die magnetischen Flusslinien in die Suspension S eindringen können und eine entsprechende Ansammlung von Magnetpartikeln M bewirken können. Vorzugsweise ist der Gehäuseabschnitt 4' insgesamt unmagnetisch ausgebildet. Dies ist in FIG 3 dadurch angedeutet, dass der Gehäuseabschnitt 4' in anderer Weise schraffiert ist, als der Rest des Gehäuses 4. D.h. gem. FIG 3 besteht der gesamte Gehäuseabschnitt 4 aus im Wesentlichen unmagnetischen Material. Insbesondere kann auch das gesamte Gehäuse 4 des Trommelscheiders 2 im Wesentlichen unmagnetisch ausgebildet sein.

Die Anordnung der Magnetfelderzeugungseinrichtung 1 an der Außenseite des Gehäuseabschnitts 4 erlaubt eine besonders einfach Zugänglichkeit und Wartbarkeit der Magnetfelderzeugungseinrichtung 1. Dies ist besonders dann von Vorteil, wenn eine Magnetfelderzeugungseinrichtung 1 verwendet wird, mittels welcher ein veränderbares Magnetfeld einstellbar ist, für welche ggf. eine höhere Anzahl an Wartungen pro Zeitintervall erfordert als dies für einen Dauermagneten mit zeitlich, in der Regel konstantem Magnetfluss.

## Patentansprüche

1. Verfahren zum Beeinflussen eines Fließparameters einer magnetische Partikel (M) aufweisenden, von einer Begrenzung (B) geführten, in einem industriellen Prozess verarbeitbaren Suspension (S), wobei mittels eines Magnetfelds auf die von der Suspension (S) umfassten Partikel (M) derart eingewirkt wird, dass die Partikel (M) sich in einem vorbestimmten Bereich der Begrenzung (B) ansammeln oder sich aus diesem vorbestimmten Bereich entfernen, und das Magnetfeld derart ausgebildet ist, dass mittels des Ansammelns und/oder Entfernens der Partikel (M) ein vorgegebener Fließparameter der Suspension (S) eingestellt wird.

2. Verfahren nach Anspruch 1,
**dadurch gekennzeichnet, dass** mittels des Magnetfelds der Durchfluss als Fließparameter eingestellt wird, wobei der Durchfluss der Suspension (S) auf im Wesentlichen Null eingestellt wird.

3. Verfahren nach Anspruch 1 oder 2,
**gekennzeichnet durch** ein veränderlich einstellbares Magnetfeld.

4. Verfahren nach Anspruch 3,
**dadurch gekennzeichnet, dass** ein Ist-Fließparameter in Strömungsrichtung vor und/oder hinter dem vorbestimmten Bereich erfasst wird, und dass das Magnetfeld anhand des Ist-Fließparameters eingestellt wird.

5. Verfahren nach Anspruch 4,
**dadurch gekennzeichnet, dass** der Ist-Fließparameter mit einem Soll-Fließparameter verglichen wird und das Magnetfeld anhand des Vergleichs gesteuert und/oder geregelt wird.

6. Verfahren nach einem der vorhergehenden Ansprüche,
**dadurch gekennzeichnet, dass** die Suspension (S) durch Zugabe magnetischer Partikel (M) für den Zweck der Einstellung des Fließparameters gebildet wird oder dass die magnetischen Partikel (M) der Suspension (S) für den Zweck der Einstellung des Fließparameters zugegeben werden.

7. Verfahren nach einem der vorhergehenden Ansprüche,
**dadurch gekennzeichnet, dass** als magnetische Partikel (M) magnetische Erz-Partikel, insbesondere ferromagnetisches Erz-Partikel, verwendet werden.

8. Steuer- und/oder Regeleinrichtung (10) für eine Vorrichtung zur Beeinflussung eines Fließparameters einer magnetische Partikel (M) aufweisenden, von einer Begrenzung (B) geführten, in einem industriellen Prozess verarbeitbaren Suspension (S), mit einem maschinenlesbaren Programmcode, welcher Steuerbefehle aufweist, welche die Steuer- und/oder Regeleinrichtung (10) bei deren Ausführung zur Durchführung des Verfahrens nach einem der vorhergehenden Ansprüche veranlassen.

9. Vorrichtung zum Beeinflussen eines Fließparameters einer magnetische Partikel (M) aufweisenden, von einer Begrenzung (B) geführten, in einem industriellen Prozess verarbeitbaren Suspension (S), umfassend eine Einrichtung zur Erzeugung eines in der Suspension (S) wirkenden Magnetfelds, wobei das Magnetfeld derart ausgestaltbar ist, dass dieses das Ansammeln und/oder Entfernen von Partikeln (M) in einem vorbestimmten Bereich der Begrenzung (B) bewirkt, wobei mittels des Ansammelns und/oder Entfernens der Partikel (M) der bestimmte Fließparameter der Suspension (S) einstellbar ist.

10. Vorrichtung nach Anspruch 9,
**gekennzeichnet durch** eine Steuer- und/oder Regeleinrichtung (10) nach Anspruch 8, wobei die Steuer-und/oder Regeleinrichtung (10) mit der Einrichtung (1) zur Erzeugung eines in der Suspension (S) wirkenden Magnetfelds wirkverbunden ist.

11. Vorrichtung nach Anspruch 10,
**dadurch gekennzeichnet, dass** die Steuer-und/oder Regeleinrichtung (10) zusätzlich mit einer Einrichtung (11) zur Erfassung eines Fließparameters der Suspension wirkverbunden ist.

12. Vorrichtung nach einem der vorhergehenden Ansprüche,
**gekennzeichnet durch** eine drehbar gelagerte zylinderformartige Separatortrommel (3) zur Trennung von magnetischen Erzpartikeln aus einer Erz-haltigen Pulpe, und ein Gehäuse (4) für die Separatortrommel, wobei ein Abschnitt (4') des Gehäuses (4) und eine dem Gehäuseabschnitt (4') gegenüberliegende Stirnseite der Separatortrommel einen von Erz-haltiger Pulpe durchfließbaren Spalt (G) bilden, wobei im Bereich des Spaltes (G) eine Einrichtung (1) zur Erzeugung eines in der Suspension (S) wirkenden Magnetfelds abgeordnet ist, wobei der Spalt (G) **durch** Einwirken des Magnetfelds mittels angesammelter magnetischer Erz-Partikel zumindest abschnittsweise im Wesentlichen durchflussdicht verschlossen ist.

13. Vorrichtung nach einem der Ansprüche 8 bis 12,
**dadurch gekennzeichnet, dass** die Magnetfelderzeugungseinrichtung auf einer der Suspension abgewandten Seite der Begrenzung angeordnet ist, wobei die Begrenzung zumindest am Ort der Anordnung wenigstens teilweise im Wesentlichen unmagnetisch ausgebildet ist.
